# FASCICULE DE BREVET EUROPEEN

(11) **EP 3 694 903 B1**
(45) Date de publication et mention de la délivrance du brevet: **30.03.2022**
(21) Numéro de dépôt: 18800239.8
(22) Date de dépôt: 10.10.2018
(51) Int. Cl.: C08G 63/672

(54) **POLYESTER THERMOPLASTIQUE HAUTEMENT INCORPORE EN MOTIF 1,4 : 3,6-DIANHYDRO-L-IDITOL**
THERMOPLASTISCHER POLYESTER MIT HOHEM ANTEIL AN 1,4:3,6-DIANHYDRO-L-IDITOL-EINHEITEN
THERMOPLASTIC POLYESTER WITH HIGH INCORPORATION OF 1,4:3,6-DIANHYDRO-L-IDITOL UNITS

(30) Priorité: 11.10.2017 FR 1759525
(43) Date de publication de la demande: 19.08.2020
(73) Titulaire: Roquette Frères, 62136 Lestrem (FR)
(72) Inventeur: SAINT-LOUP, René, 59160 Lomme (FR); JACQUEL, Nicolas, 59130 Lambersart (FR)
(74) Mandataire: Plasseraud IP
(86) Numéro de dépôt international: PCT/FR2018/052505
(87) Numéro de publication internationale: WO 2019/073169

(56) Documents cités:
- WO-A1-2015/142181
- WO-A1-2015/166070
- WO-A1-2016/066956
- WO-A1-2016/189239
- THIEM ET AL: "Synthesis of Polyterephthalates derived from dianhydrohexitols.", POLYMER BULLETIN, vol. 11, 1984, pages 365-369, XP002781798,

## Description

### Domaine de l'invention

La présente invention se rapporte au domaine des polymères et concerne particulièrement un polyester thermoplastique comprenant au moins un motif 1,4 : 3,6-dianhydro-L-iditol. L'invention a également pour objet un procédé de préparation dudit polyester, une composition comprenant ledit polyester ainsi que l'utilisation dudit polyester pour la fabrication d'articles plastiques finis ou semi-finis.

### Arrière-plan technologique de l'invention

Du fait de leurs nombreux avantages, les matières plastiques sont devenues incontournables pour la fabrication en série d'objets. En effet, leur caractère thermoplastique permet à ces matières d'être transformées à cadence élevée en toutes sortes d'objets.

Classiquement, certains polyesters aromatiques thermoplastiques ont des propriétés thermiques leur permettant d'être utilisés directement pour la fabrication de matériaux. Ils comprennent des motifs diol aliphatique et diacide aromatique. Parmi ces polyesters aromatiques, on peut citer le polyéthylène téréphtalate (PET), qui est un polyester comprenant des motifs éthylène glycol et acide téréphtalique, servant par exemple à la fabrication de récipients, d'emballages, de films ou encore de fibres.

Concernant les motifs éthylène glycol et acide téréphtalique compris dans le PET, ils peuvent soit être obtenus par réaction d'estérification d'éthylène glycol et d'acide téréphtalique, soit par une réaction de trans-estérification d'éthylène glycol et d'ester d'acide téréphtalique.

Toutefois, pour certaines applications ou dans certaines conditions d'utilisation, ces polyesters ne présentent pas toutes les propriétés requises. C'est ainsi que des PET modifiés glycol (PETg) ont été développés. Ce sont généralement des polyesters comprenant, en plus des motifs éthylène glycol et acide téréphtalique, des motifs cyclohexanediméthanol (CHDM). L'introduction de ce diol dans le PET lui permet d'adapter les propriétés à l'application visée, par exemple d'améliorer sa résistance au choc ou ses propriétés optiques, notamment lorsque le PETg est amorphe. Par contre, l'augmentation de la température de transition vitreuse causée par le CHDM est très modérée.

Pour des raisons essentiellement écologiques, les matières plastiques issues de la pétrochimie sont de moins en moins plébiscitées et de nouvelles solutions ont commencé à voir le jour. De plus en plus, les sources renouvelables font leur apparition dans les polyesters thermoplastiques, d'autant plus que ces dernières permettent de conférer des propriétés améliorées au polyester qui les incorpore.

Ainsi, d'autres PET modifiés ont également été développés en introduisant dans le polyester des motifs 1,4 : 3,6-dianhydrohexitol, notamment de l'isosorbide (PEIT). Ces polyesters modifiés présentent des températures de transition vitreuse plus élevées que les PET non modifiés ou les PETg comprenant du CHDM. En outre, les 1,4 : 3,6-dianhydrohexitols présentent l'avantage de pouvoir être obtenus à partir de ressources renouvelables telles que l'amidon. Ces polyesters modifiés sont notamment utiles pour la fabrication de bouteilles, de films, de feuilles épaisses, de fibres ou d'articles nécessitant des propriétés optiques élevées.

Cependant, d'une manière générale, un des problèmes rencontré pour la fabrication de polyesters comprenant des motifs 1,4 : 3,6-dianhydrohexitols réside dans le fait que le taux d'incorporation de ces motifs n'est pas toujours important, et suivant les conditions de synthèse, un taux de perte pouvant aller jusqu'à 50 % est parfois observé. Un taux d'incorporation élevé de motifs 1,4 : 3,6-dianhydrohexitol est cependant souhaitable pour atteindre des performances thermiques et mécaniques suffisantes pour des diverses applications comme par exemple dans le secteur de l'emballage.

La faible incorporation peut s'expliquer par le fait que les réactions d'estérification de l'isosorbide avec l'acide téréphtalate ou de transestérifications avec les alkyles téréphtalates impliquent des hydroxyls secondaires et sont par conséquent moins rapides que des réactions impliquant des alcools primaires tels que l'éthylène glycol ou le 1,3-propanediol. En conséquence, cela induit une incorporation insuffisante de l'isosorbide dans le copolymère.

Dans la perspective de l'obtention d'une incorporation améliorée de l'isosorbide dans les polyesters, le document US6737481 décrit un procédé mettant en œuvre la synthèse d'un motif de liaison. Ce motif de liaison est constitué d'isosorbide et de diacides tels que l'acide isophtalique et l'acide phtalique. Le motif de liaison subi ensuite une étape de polycondensation par mélange avec un pré-polymère. Le pré-polymère peut être choisi parmi les poly(alkylène téréphtalate), avec une préférence le poly(1,3-propylène téréphtalate). Après l'étape de polycondensation, un polymère préféré est le poly(éthylène-co-isosorbide isophtalate).

Le document US618730 décrit un procédé de production de polyester comprenant de l'isosorbide, ledit procédé permettant d'obtenir un taux d'incorporation élevé en isosorbide dans le polyester final. Le procédé décrit le mélange par fusion d'un premier polyester incorporant de l'isosorbide avec un second polyester pendant un temps suffisant pour permettre une réaction de transestérification et d'obtenir ainsi un copolymère. Le premier polyester est essentiellement constitué de motif isosorbide et de motif acide dicarboxylique tandis que le second polyester est essentiellement constitué de motif acide dicarboxylique et d'un motif diol autre que l'isosorbide.

Les documents WO2015/166070, WO 2016/189239, WO 2016/066956, WO 2015/142181 et THIEM ET AL « Synthesis of Polyterephthlates derived from dianhydrohexitols" POLYMER BULLETIN vol 11,1984, pages 365-369 portent sur des polyesters. Cependant, aucun de ces documents ne divulguent des polyesters tels que décrits précédemment.

Ainsi, il est connu que l'amélioration des taux d'incorporation de motif isosorbide dans les polyesters peut être obtenue par la synthèse d'un pré-polymère. Cependant, la synthèse d'un pré-polymère, au-delà d'améliorer les taux d'incorporation, constitue une étape supplémentaire dans les procédés de préparation des polyesters thermoplastiques. Il y a donc un besoin de disposer d'un polyester thermoplastique hautement incorporé en motif 1,4 : 3,6-dianhydrohexitol particulier et pouvant être obtenu par un procédé ne nécessitant pas d'étape intermédiaire de synthèse de pré-polymère.

Il est ainsi du mérite de la demanderesse d'avoir trouvé que cet objectif pouvait être atteint, contre toute attente, avec un polyester thermoplastique comprenant au moins un motif 1,4 : 3,6-dianhydro-L-iditol.

### Résumé de l'invention

Un premier objet de l'invention concerne donc un polyester thermoplastique et particulièrement un polyester thermoplastique comprenant :
- au moins un motif 1,4 : 3,6-dianhydro-L-iditol (A);
- au moins un motif diol aliphatique linéaire (B)
- au moins un motif acide dicarboxylique aromatique (C),
ledit polyester ayant une viscosité réduite en solution (25°C ; phénol (50%m) : ortho-dichlorobenzène (50%m) ; 5 g de polyester /L) supérieure à 25 ml/g étant exempt de tout motif 1,4 : 3,6 - dianhydroxyhexitol autre que le motif 1,4:3,6-dianhydro-L-iditol (A), la quantité molaire de motif (A) étant de 4 moles % à 90 moles % par rapport à la totalité des motifs présentes dans le polyester et la quantité molaire de motif (B) étant de 10 mol% à 96 mole % par rapport à la totalité des motifs présents dans le polyester.

Un second objet de l'invention concerne un procédé de préparation d'un polyester thermoplastique tel que défini précédemment.

Un troisième objet concerne une composition comprenant un polyester tel que défini précédemment.

Enfin, un quatrième objet de l'invention concerne l'utilisation dudit polyester ou d'une composition comprenant ledit polyester pour la fabrication d'articles plastiques finis ou semi-finis, tels que des emballages.

Le polyester thermoplastique selon l'invention est avantageux en ce qu'il présente un taux d'incorporation élevé en motif 1,4 : 3,6-dianhydro-L-iditol. Comparativement à des polyesters thermoplastiques à base de motifs 1,4 : 3,6-dianhydrosorbitol, le polyester selon l'invention présente moins de pertes en motifs 1,4 : 3,6-dianhydro-L-iditol au moment de la préparation. Ainsi, le procédé d'obtention dudit polyester présente un rendement amélioré.

### Description détaillée de l'invention

Le polyester thermoplastique objet de l'invention est un polyester thermoplastique comprenant :
- au moins un motif 1,4 : 3,6-dianhydro-L-iditol (A),
- au moins un motif diol aliphatique linéaire (B),
- au moins un motif acide dicarboxylique aromatique (C),
ledit polyester thermoplastique ayant une viscosité réduite en solution (25°C ; phénol (50%m) : ortho-dichlorobenzène (50%m) ; 5 g de polyester /L) supérieure à 25 ml/g étant exempt de tout motif 1,4 : 3,6 - dianhydroxyhexitol autre que le motif 1,4:3,6-dianhydro-L-iditol (A), la quantité molaire de motif (A) étant de 4 moles % à 90 moles % par rapport à la totalité des motifs présentes dans le polyester et la quantité molaire de motif (B) étant de 10 mol% à 96 mole % par rapport à la totalité des motifs présents dans le polyester.

D'une manière tout à fait surprenante, les inventeurs ont constaté que le polyester thermoplastique selon l'invention présente un taux supérieur d'incorporation du motif 1,4 : 3,6-dianhydro-L-iditol comparativement à d'autres polyester tels que des poly(alkylène-co-dianhydrohexitol téréphtalate), et notamment le poly(alkylène-co-isosorbide téréphtalate).

En effet, la demanderesse a démontré que dans ses conditions de synthèses et à quantité égale en motif 1,4 : 3,6-dianhydrohexitol, le polyester thermoplastique selon l'invention présente un taux d'incorporation du motif 1,4 : 3,6-dianhydro-L-iditol d'au moins 85 %, voire d'au moins 90% selon certaines concentrations, là où par exemple le poly(alkylène-co-isosorbide téréphtalate) présente un taux d'incorporation du motif 1,4 : 3,6-dianhydro-D-sorbitol inférieur à 85%.

Ainsi, les polyesters thermoplastiques selon l'invention sont particulièrement avantageux en ce que comparativement aux poly(alkylène-co-isosorbide téréphtalate), pour des quantités similaires en motif 1,4 : 3,6-dianhydrohexitol, ils présentent moins de perte lors de la synthèse.

De même, il a été constaté que la température de transition vitreuse était améliorée, tout comme l'allongement à la rupture comparativement au poly(alkylène-co-isosorbide téréphtalate).

Au sens de la présente invention, le taux d'incorporation du motif 1,4 : 3,6-dianhydro-L-iditol est qualifié d'élevé lorsque ce dernier est d'au moins 85 % et notamment d'au moins 90 %. Les polyesters ainsi obtenus sont qualifiés de polyesters hautement incorporés en motifs 1,4 : 3,6-dianhydro-L-iditol.

Le motif 1,4 : 3,6-dianhydro-L-iditol (A) est également appelé « isosidide ». Ce dernier peut être obtenu par déshydratation de l'iditol. Le polyester thermoplastique selon l'invention est donc exempt de tout autre motif 1,4 : 3,6-dianhydrohexitol.

La quantité molaire de motif (A) est de 4 moles% à 90 moles% par rapport à la totalité des motifs diols présents dans le polyester. De préférence, la quantité molaire de motif 1,4 : 3,6-dianhydro-L-iditol (A) est de 4 moles% à 60 moles%, et tout particulièrement de 4 moles% à 40 moles%. Les quantités sont exprimées par rapport à la quantité totale des motifs diols présents dans le polyester.

Comme mentionné précédemment, le polyester thermoplastique selon l'invention présente un taux d'incorporation du motif (A) particulièrement élevé. En effet, le polyester thermoplastique selon l'invention présente un taux d'incorporation du motif 1,4 : 3,6-dianhydro-L-iditol d'au moins 85 %, et tout particulièrement, un taux d'incorporation du motif 1,4 : 3,6-dianhydro-L-iditol d'au moins 90 %. On entend par l'expression «taux d'incorporation », le rapport de la quantité de motifs 1,4 : 3,6-dianhydro-L-iditol présente dans le polyester final en fonction de la quantité initiale présente dans le réacteur pour la polymérisation.

Le polyester thermoplastique selon l'invention se présente donc comme une alternative particulièrement intéressante comparativement aux polyesters thermoplastiques connus de l'art antérieur. Les pertes en motifs 1,4 : 3,6-dianhydro-L-iditol générées pendant la polycondensation sont plus faibles, mais surtout moins importantes que celles engendrées par l'utilisation de motifs 1,4 : 3,6-dianhydro-D-sorbitol. Le polyester thermoplastique présente ainsi un taux d'incorporation élevé sans qu'il soit nécessaire de recourir à une étape de synthèse d'un pré-polymère. Ainsi, le polyester thermoplastique selon l'invention est également intéressant en termes de coût de fabrication.

Le motif diol aliphatique linéaire (B) peut être un diol aliphatique non cyclique linéaire ou ramifié. Il peut également être un diol aliphatique non cyclique saturé ou insaturé. Outre l'éthylène glycol, le diol aliphatique non cyclique linéaire saturé peut par exemple être le 1,3-propanediol, le 1,4-butanediol, le 1,5-pentanediol, le 1,6-hexanediol, le 1,8-octanediol et/ou le 1,10-decanediol. Comme exemple de diol aliphatique non cyclique ramifié saturé, on peut citer le 2-methyl-1,3-propanediol, le 2,2,4-trimethyl-1,3-pentanediol, le 2-ethyl-2-butyl-1,3-propanediol, le propylèneglycol et/ou le néopentylglycol. Comme exemple de diol aliphatique insaturé, on peut citer par exemple le cis-2-butene-1,4-diol. De préférence, le motif diol aliphatique linéaire est l'éthylène glycol.

La quantité molaire de motif (B) est de 10 moles% à 96 moles% par rapport à la totalité des motifs diols présents dans le polyester. De préférence, la quantité molaire de motif diol aliphatique linéaire (B) est de 40 moles% à 96 moles%, et tout particulièrement de 60 moles% à 96 moles%. Les quantités étant exprimées par rapport à la quantité totale des motifs diols présents dans le polyester.

Le motif acide dicarboxylique aromatique (C) peut être choisi parmi les acides dicarboxyliques aromatiques connus de l'homme du métier. L'acide dicarboxylique aromatique peut être un dérivé des naphtalates, téréphtalates ou encore d'isophtalates ou leurs mélanges. Avantageusement, l'acide dicarboxylique aromatique est un dérivé des téréphtalates et de préférence, l'acide dicarboxylique aromatique est l'acide téréphtalique.

La viscosité réduite en solution du polyester thermoplastique selon l'invention peut être supérieure à 25 mL/g, de préférence supérieure à 45 mL/g, et de préférence encore, supérieure à 55 mL/g. La viscosité réduite en solution peut être mesurée à l'aide d'un viscosimètre capillaire Ubbelohde à 25°C dans un mélange équimassique de phénol et d'ortho-dichlorobenzène après dissolution du polymère à 135°C sous agitation, la concentration de polyester thermoplastique introduit étant de 5g/L.

Ce test de mesure de viscosité réduite en solution est, de par le choix des solvants et de la concentration des polymères utilisés, parfaitement adapté pour déterminer la viscosité du PAIIT de la présente invention.

Selon un mode de réalisation particulier, le polyester thermoplastique selon l'invention est un poly(alkylène-co-isoidide téréphtalate). Le terme « alkylène », seul ou en tant que partie d'un autre groupement, désigne une chaine hydrocarbonée saturée de formule CₙH₂ₙ dans lequel n est un nombre entier supérieur ou égal à 1. De préférence le poly(alkylène-co-isoidide téréphtalate) est le poly(éthylène-co-isoidide téréphtalate).

Le polyester thermoplastique de l'invention peut par exemple comprendre :
- une quantité molaire de motifs 1,4 : 3,6-dianhydro-L-iditol (A) allant de 4 à 90 moles%, la quantité étant exprimée par rapport à la quantité totale des diols,
- une quantité molaire de motifs diol aliphatique linéaire (B) allant de 10 à 96 moles%, la quantité étant exprimée par rapport à la quantité totale des diols,
- une quantité molaire de motifs acide dicarboxylique aromatique (C) allant de 80 à 100 moles%, la quantité étant exprimée par rapport à la quantité totale des diacides.

Les quantités en différents motifs dans le polyester thermoplastique peuvent être déterminées par RMN ¹H ou par analyse chromatographique du mélange de monomères issus d'une méthanolyse ou d'une hydrolyse complète du polyester. De préférence, les quantités en différents motifs dans le polyester thermoplastique sont déterminées par RMN ¹H_{.}

L'homme de l'art peut aisément trouver les conditions d'analyse pour déterminer les quantités en chacun des motifs du polyester thermoplastique. Par exemple, à partir d'un spectre RMN d'un poly(éthylène-co-isoidide téréphtalate), les déplacements chimiques relatifs à l'éthylène glycol sont compris entre 4,5 et 5,1 ppm, les déplacements chimiques relatifs au cycle téréphtalate sont compris entre 7,8 et 8,4 ppm et les déplacements chimiques relatifs à l'isoidide sont compris entre 4,2 et 4,4 ppm, 4,85 et 5,0 ppm, et 5,2 et 5,8 ppm. L'intégration de chaque signal permet de déterminer la quantité de chaque motif du polyester.

Le polyester thermoplastique selon l'invention peut être semi-cristallin ou amorphe. Le caractère semi-cristallin du polymère dépend principalement des quantités en chacun des motifs dans le polymère. Ainsi, lorsque le polymère selon l'invention comprend de grandes quantités de motifs 1,4 : 3,6-dianhydro-L-iditol (A), le polymère est généralement amorphe, alors qu'il est généralement semi-cristallin dans le cas inverse.

De préférence, lorsque le polyester selon l'invention est semi-cristallin, il présente une température de fusion allant de 190 à 255°C, par exemple de 200 à 250°C.

Avantageusement, lorsque le polyester thermoplastique selon l'invention est semi-cristallin, il présente une chaleur de fusion supérieure à 20 J/g, de préférence supérieure à 30 J/g, la mesure de cette chaleur de fusion consistant à faire subir à un échantillon de ce polyester un traitement thermique à 170°C pendant 10 heures puis à évaluer la chaleur de fusion par DSC en chauffant l'échantillon à 10°C/min.

Le polyester thermoplastique selon l'invention présente notamment une clarté L* supérieure à 40. Avantageusement, la clarté L* est supérieure à 50, de préférence supérieure à 60, tout préférentiellement supérieure à 65, par exemple supérieure à 70. De plus, le polyester thermoplastique présente une valeur a* comprise de -1,3 à 1,0, de préférence de -1 à 0,5 et une valeur b* comprise de -2 à 3,0 et de préférence de -1,6 à 2,0.

Les paramètres de coloration L*, a* et b* peuvent être déterminés à l'aide d'un spectrophotomètre, en utilisant le modèle CIE Lab.

Le polyester thermoplastique selon l'invention présente une température de transition vitreuse élevée. Avantageusement, le PEIT présente une température de transition vitreuse 75 °C à 115°C, de préférence de 80 °C à 105°C.

Les températures de transition vitreuse et de fusion sont mesurées par les méthodes classiques, notamment en utilisant la calorimétrie différentielle à balayage (DSC) en utilisant une vitesse de chauffe de 10°C/min. Le protocole expérimental est détaillé dans la partie exemples ci-après.

Avantageusement, le polyester thermoplastique selon l'invention présente des propriétés mécaniques améliorées. En effet, l'allongement à la rupture ainsi que la dureté sont plus importants dans le polyester thermoplastique selon l'invention comparativement à d'autre polyester comme par exemple à des poly(alkylène-co-isosorbide téréphtalate). Ainsi, le polyester thermoplastique selon l'invention, lorsqu'il est semi-cristallin, peut présenter un allongement à la rupture compris entre 500 % et 600 %, comme par exemple environ 550 %.

De même, le polyester thermoplastique selon l'invention présente un temps de demi-cristallisation plus important comparativement à un poly(alkylène-co-isosorbide téréphtalate), entrainant ainsi une meilleure processabilité pour la fabrication de d'articles plastiques et une amélioration des propriétés optiques, notamment des propriétés de transparence.

L'invention a également pour objet un procédé de fabrication du polyester thermoplastique selon l'invention.

Le procédé de fabrication selon l'invention est particulièrement avantageux car il présente un rendement amélioré pour l'incorporation des motifs 1,4 : 3,6-dianhydro-L-iditol au sein du polyester thermoplastique. Ainsi, le procédé de fabrication du polyester thermoplastique comprend :
- une étape d'introduction dans un réacteur de monomères comprenant au moins un 1,4 : 3,6-dianhydro-L-iditol (A), au moins un diol aliphatique linéaire (B) et au moins un acide dicarboxylique aromatique (C),
- une étape d'introduction dans le réacteur d'un système catalytique ;
- une étape de polymérisation desdits monomères pour former le polyester thermoplastique, ladite étape consistant en :
   ▪ un premier stade d'oligomérisation pendant lequel le milieu réactionnel est agité sous atmosphère inerte à une température allant de 230 à 280°C, avantageusement de 240 à 270°C, par exemple 250°C ;
   ▪ un second stade de condensation des oligomères pendant lequel les oligomères formés sont agités sous vide à une température allant de 250 à 300°C afin de former le polyester thermoplastique, avantageusement de 260 à 280°C, par exemple 265°C ;
- une étape de récupération du polyester thermoplastique.

Si le polyester selon l'invention est semi-cristallin ce procédé peut comprendre une étape de post-condensation à l'état solide sous vide ou sous balayage d'un gaz inerte tel que par exemple de l'azote (N₂), et à une température inférieure de 5 à 30 °C à la température de fusion du polyester.

Le procédé comprend une première étape d'introduction dans un réacteur de monomères comprenant au moins un 1,4 : 3,6-dianhydro-L-iditol (A), au moins un diol aliphatique linéaire (B) et au moins un acide dicarboxylique aromatique (C). Le monomère (A) peut être introduit en solution dans l'eau ou également en solution dans le diol aliphatique linéaire (B). Dans ce cas, il peut se présenter sous la forme d'une poudre, d'écailles ou encore de granulé.

Le procédé comprend également une étape d'introduction dans le réacteur d'un système catalytique. On entend par système catalytique, un catalyseur ou un mélange de catalyseurs, éventuellement dispersé(s) ou fixé(s) sur un support inerte. Le catalyseur est utilisé dans des quantités adaptées pour obtenir un polyester thermoplastique conformément à l'invention. Le système catalytique est utilisé dans des quantités catalytiques habituellement utilisées pour la fabrication de polyesters aromatiques. A titre d'exemple, le système catalytique peut être utilisé selon une quantité massique de 10 à 500 ppm de métal par rapport au polyester final.

Le système catalytique est avantageusement choisi dans le groupe constitué par les dérivés d'étain, préférentiellement d'étain, de titane, de zirconium, de germanium, d'antimoine, de bismuth, d'hafnium, de magnésium, de cérium, de zinc, de cobalt, de fer, de manganèse, de calcium, de strontium, de sodium, de potassium, d'aluminium, de lithium ou d'un mélange de deux ou plusieurs de ces catalyseurs. Des exemples de tels composés peuvent être par exemple ceux donnés dans le brevet EP 1882712 B1 aux paragraphes [0090] à [0094]. De préférence, le catalyseur est un dérivé d'étain, de titane, de germanium, d'aluminium ou d'antimoine, plus préférentiellement un dérivé de germanium, par exemple l'oxyde de germanium.

Selon le procédé, on utilise avantageusement un anti-oxydant lors de l'étape de polymérisation des monomères. Ces anti-oxydants permettent de réduire la coloration du PAIIT obtenu. Les anti-oxydants peuvent être des anti-oxydants primaires et/ou secondaires. L'anti-oxydant primaire peut être un phénol encombré stériquement tels que les composés Hostanox^{®} O 3, Hostanox^{®} O 10, Hostanox^{®} O 16, Ultranox^{®} 210, Ultranox^{®}276, Dovernox^{®} 10, Dovernox^{®} 76, Dovernox^{®} 3114, Irganox^{®} 1010, Irganox^{®} 1076, Ethanox330 ou un phosphonate tel que l'Irgamod^{®} 195. L'anti-oxydant secondaire peut être des composés phosphorés trivalents tels que Ultranox^{®} 626, Doverphos^{®} S-9228, Hostanox^{®} P-EPQ, ADK STAB PEP-8, ADK STAB 3010 ou l'Irgafos 168.

Il est également possible d'introduire comme additif de polymérisation dans le réacteur au moins un composé susceptible de limiter les réactions parasites d'éthérification, tel que l'acétate de sodium, le tétraméthylammonium hydroxyde, ou le tétraéthylammonium hydroxyde.

Le procédé de l'invention comprend une étape de récupération du polyester thermoplastique à l'issue de l'étape de polymérisation. On peut récupérer le polyester thermoplastique en l'extrayant du réacteur sous forme d'un jonc de polymère fondu. Ce jonc peut être transformé en granulés en utilisant les techniques classiques de granulation. Le polyester ainsi récupéré présente une viscosité réduite en solution supérieure à 25 mL/g.

Selon une variante du procédé de l'invention, le procédé de fabrication du polyester thermoplastique comprend une étape d'augmentation de masse molaire par post-polymérisation d'un polymère qui comprend au moins un 1,4 : 3,6-dianhydro-L-iditol (A), au moins un motif diol aliphatique linéaire (B) et au moins un motif acide dicarboxylique aromatique (C).

Selon cette seconde variante avantageuse de l'invention, on parvient à obtenir un polyester présentant une viscosité réduite en solution particulièrement élevée, par exemple supérieure à 70 mL/g de préférence supérieure à 80 mL/g.

L'étape de post-polymérisation peut consister en une étape de polycondensation à l'état solide (PCS) du polymère de viscosité réduite en solution plus faible ou en une étape d'extrusion réactive du polymère de viscosité réduite en solution plus faible en présence d'au moins un allongeur de chaîne. De préférence, l'étape de post-polymérisation est réalisée par PCS.

La PCS est généralement réalisée à une température comprise entre la température de transition vitreuse et la température de fusion du polymère. Ainsi, pour réaliser la PCS, il est nécessaire que le polymère soit semi-cristallin. De préférence, ce dernier présente une chaleur de fusion supérieure à 20 J/g, de préférence supérieure à 30 J/g, la mesure de cette chaleur de fusion consistant à faire subir à un échantillon de ce polymère de viscosité réduite en solution plus faible un traitement thermique à 170°C pendant 10 heures puis à évaluer la chaleur de fusion par DSC en chauffant l'échantillon à 10 K/min.

L'invention porte également sur une composition comprenant le polyester thermoplastique décrit précédemment, ladite composition pouvant comprendre au moins un additif ou au moins un polymère additionnel ou au moins un mélange de ceux-ci.

La composition de polyester thermoplastique selon l'invention peut comprendre les additifs de polymérisation éventuellement utilisés lors du procédé. Elle peut également comprendre d'autres additifs et/ou polymères additionnels qui sont généralement ajoutés lors d'une étape de mélange thermomécanique ultérieure ou directement dans un des réacteurs de polymérisation.

A titre d'exemple d'additif, on peut citer les charges ou les fibres de nature organique ou inorganique, nanométriques ou non, fonctionnalisées ou non. Il peut s'agir de silices, de zéolithes, de fibres ou de billes de verre, d'argiles, de mica, de titanates, de silicates, de graphite, de carbonate de calcium, de nanotubes de carbone, de fibres de bois, de fibres de carbone, de fibres de polymère, de protéines, de fibres cellulosiques, de fibres ligno-cellulosiques et d'amidon granulaire non déstructuré. Ces charges ou fibres peuvent permettre d'améliorer la dureté, la rigidité ou la perméabilité à l'eau ou aux gaz. La composition peut comprendre de 0,1 à 75 % en masse charges et/ou fibres par rapport au poids total de la composition, par exemple de 0,5 à 50 %. L'additif utile à la composition selon l'invention peut également comprendre des agents opacifiants, des colorants et des pigments. Ils peuvent être choisis parmi l'acétate de cobalt et les composés suivants : HS-325 Sandoplast^{®} RED BB (qui est un composé porteur d'une fonction azo également connu sous le nom Solvent Red 195), HS-510 Sandoplast^{®} Blue 2B qui est une anthraquinone, Polysynthren^{®} Blue R, et Clariant^{®} RSB Violet.

La composition peut également comprendre comme additif un agent de procédé, ou *processing aid,* pour diminuer la pression dans l'outil de mise en œuvre. Un agent de démoulage permettant de réduire l'adhésion aux matériels de mise en forme du polyester, tels que les moules ou les cylindres de calandreuses peut également être utilisé. Ces agents peuvent être sélectionnés parmi les esters et les amides d'acide gras, les sels métalliques, les savons, les paraffines ou les cires hydrocarbonées. Des exemples particuliers de ces agents sont le stéarate de zinc, le stéarate de calcium, le stéarate d'aluminium, les stéaramide, les érucamide, les béhénamide, les cires d'abeille ou de *candelilla.*

La composition selon l'invention peut comprendre également d'autres additifs tels que les agents stabilisants, par exemple les agents stabilisants lumière, les agents stabilisants UV et les agents stabilisants thermiques, les agents fluidifiants, les agents retardateurs de flamme et les agents antistatiques.

La composition peut comprendre en outre un polymère additionnel, différent du polyester selon l'invention. Ce polymère peut être choisi parmi les polyamides, les polyesters autres que le polyester selon l'invention, le polystyrène, les copolymères de styrène, les copolymères styrène-acrylonitrile, les copolymères styrène-acrylonitrile-butadiène, les polyméthacrylates de méthyle, les copolymères acryliques, les poly(éther-imides), les polyoxyde de phénylène tels que le polyoxyde de (2,6-diméthylphenylène), les polysulfate de phénylène, les poly (ester-carbonates), les polycarbonates, les polysulfones, les polysulfone ethers, les polyéther cétone et les mélanges de ces polymères.

La composition peut également comprendre comme polymère additionnel un polymère permettant d'améliorer les propriétés au choc du polymère, notamment les polyoléfines fonctionnelles telles que les polymères et copolymères d'éthylène ou de propylène fonctionnalisés, des copolymères cœur-écorce ou des copolymères à bloc.

La composition selon l'invention peut également comprendre des polymères d'origine naturelle, tels que l'amidon, la cellulose, les chitosans, les alginates, les protéines telles que le gluten, les protéines de pois, la caséine, le collagène, la gélatine, la lignine, ces polymères d'origine naturelle pouvant ou non être modifiés physiquement ou chimiquement. L'amidon peut être utilisé sous forme déstructurée ou plastifiée. Dans le dernier cas, le plastifiant peut être de l'eau ou un polyol, notamment le glycérol, le polyglycérol, l'isoidide, les sorbitans, le sorbitol, le mannitol ou encore de l'urée. Pour préparer la composition, on peut notamment utiliser le procédé décrit dans le document WO 2010/010282 A1.

La composition selon l'invention peut être fabriquée par les méthodes classiques de mélanges des thermoplastiques. Ces méthodes classiques comprennent au moins une étape de mélange à l'état fondu ou ramolli des polymères et une étape de récupération de la composition. On peut réaliser ce procédé dans des mélangeurs internes à pales ou à rotors, des mélangeurs externes, des extrudeuses mono-vis, bi-vis co-rotatives ou contrarotatives. Toutefois, on préfère réaliser ce mélange par extrusion, notamment en utilisant une extrudeuse co-rotative. Le mélange des constituants de la composition peut également se faire sous atmosphère inerte.

L'invention a également pour objet l'utilisation du polyester thermoplastique selon l'invention ou d'une composition comprenant ledit polyester, pour la fabrication d'articles plastiques finis ou semi-finis.

L'article plastique peut être de tout type et être obtenu en utilisant les techniques classiques de transformation.

Pour les films ou les feuilles, notamment pour utilisation dans le domaine du packaging, ces derniers peuvent être fabriqués par les techniques de calandrage, d'extrusion film cast, d'extrusion soufflage de gaine, lesdites techniques étant suivies ou non de techniques d'étirage ou d'orientation mono axiales ou polyaxiales.

L'article plastique selon l'invention peut aussi être un article creux. Il peut s'agir de bouteilles, par exemple de bouteilles d'eau gazeuse ou non, de bouteilles de jus, de bouteilles de soda, de bombonnes, de bouteilles de boissons alcoolisées, de flacons, tels que par exemple de flacons de médicaments ou de flacons de produits cosmétiques. Les flacons pouvant être des aérosols, des plats, par exemple pour plats cuisinés, des plats pour micro-ondes, des pots, par exemple des pots de yaourt, de compote ou de produits cosmétiques, ou encore des couvercles. Ces récipients peuvent être de toutes tailles et être fabriqués par extrusion soufflage, thermoformage ou injection soufflage.

L'article plastique selon l'invention peut aussi être un article optique, c'est-à-dire un article nécessitant de bonnes propriétés optiques tels que des lentilles, des disques, des panneaux transparents ou translucides, des composants de diodes électroluminescentes (LED), des fibres optiques, des films pour les écrans LCD ou encore des vitres. Grâce à la température de transition vitreuse élevée du polyester selon l'invention, les articles optiques présentent l'avantage de pouvoir être placés à proximité de sources de lumière et donc de chaleur, tout en conservant une excellente stabilité dimensionnelle et une bonne tenue à la lumière.

Les articles plastiques peuvent également être des articles multicouches, dont au moins une couche comprend le polymère ou la composition selon l'invention. Ces articles peuvent être fabriqués par un procédé comprenant une étape de co-extrusion dans le cas où les matériaux des différentes couches sont mis en contact à l'état fondu. A titre d'exemple, on peut citer les techniques de co-extrusion de tube, co-extrusion de profilé, de co-extrusion soufflage (en anglais « blowmolding ») de bouteille, de flacon ou de réservoir, généralement regroupés sous le terme de co-extrusion soufflage de corps creux, co-extrusion gonflage appelée également soufflage de gaine (en anglais « film blowing ») et co-extrusion à plat (« en anglais « cast coextrusion »). Ils peuvent également être fabriqués selon un procédé comprenant une étape d'application d'une couche de polyester à l'état fondu sur une couche à base de polymère organique, de métal ou de composition adhésive à l'état solide. Cette étape peut être réalisée par pressage, par surmoulage, stratification ou laminage (en anglais « lamination »), extrusion-laminage, couchage (en anglais « coating »), extrusion-couchage ou enduction.

L'article plastique selon l'invention peut aussi être une fibre, un fil ou un filament. Les filaments peuvent être obtenus par différents procédés tels que le filage humide (wet spinning en anglais), filage à sec (dry spinning), filage du fondu (melt spinning), filage d'un gel (gel spinning or dry-wet spinning), ou encore électrofilage (electrospinning). Les filaments obtenus par filage peuvent également être étirés ou orientés.

Les filaments, si désiré, peuvent être coupés en fibres courtes, ceci permet de mélanger ces fibres avec d'autres fibres pour créer des mélanges et obtenir un fil.

Les fils ou filaments peuvent également être tissés pour la fabrication de tissus pour l'habillement, des tapis, de rideaux, de tentures, des linges de maison, de revêtements muraux, des voiles de bateau, des tissus d'ameublements ou encore de sangles ou ceintures de sécurité.

Les fils, fibres ou filaments peuvent égalent être utilisés dans des applications techniques en tant que renforts comme dans des tuyaux, des courroies de puissance, des pneus, ou comme renfort dans toute autre matrice polymère.

Les fils, fibres ou filaments peuvent également être assemblés sous forme de non-tissés (ex : feutres), sous forme de cordes, ou encore tricotés sous forme de filets.

L'invention est également décrite dans les exemples ci-après, qui se veulent purement illustratifs et ne limitent en rien la portée de la présente invention.

### Exemples

Les propriétés des polymères ont été étudiées avec les techniques suivantes :
La viscosité réduite en solution est évaluée à l'aide d'un viscosimètre capillaire Ubbelohde à 25°C dans un mélange équimassique de phénol et d'ortho-dichlorobenzène après dissolution du polymère à 135°C sous agitation magnétique. Pour ces mesures, la concentration de polymère introduite est de 5g/L.
La couleur du polymère a été mesurée sur les granulés (25 grammes de granulés dans la cellule de mesure) à l'aide d'un spectrophotomètre Konica Minolta CM-2300d.
Les propriétés mécaniques des polymères ont été évaluées suivant les normes suivantes : Test de traction : ISO 527

DSC

Les propriétés thermiques des polyesters ont été mesurées par calorimétrie différentielle à balayage (DSC) : L'échantillon est tout d'abord chauffé sous atmosphère d'azote dans un creuset ouvert de 10 à 280°C (10°C.min-1), refroidi à 10°C (10°C.min-1) puis réchauffé à 320°C dans les mêmes conditions que la première étape. Les températures de transition vitreuse ont été prises au point médian (en anglais mid-point) du second chauffage. Les températures de fusion éventuelles sont déterminées sur le pic endothermique (début du pic (en anglais, onset)) au premier chauffage. De même la détermination de l'enthalpie de fusion (aire sous la courbe) est réalisée au premier chauffage.

Pour les exemples illustratifs présentés ci-dessous les réactifs suivants ont été utilisés :
- Ethylène glycol (pureté >99,8 %) de Sigma-Aldrich
- Solution d'isoidide à 52.5 % dans l'eau (pureté >99,5 %) préparé par Roquette
- Acide téréphtalique (pureté 99+ %) de Accros
- Dioxyde de germanium (>99,99 %) de Sigma Aldrich
- Acétate de cobalt tétrahydrate (99,999 %) de Sigma Aldrich
- Irganox 1010 de BASF SE : Anti-oxydant
- Hostanox P-EPQ de Clariant : Anti-oxydant
- Acide phosphorique (99,999+ %) de Sigma Aldrich : Anti-oxydant
- Tetraéthylammonium hydroxyde en solution à 40 % dans l'eau de Sigma Aldrich :
   additif de polymérisation limitant les réactions d'éthérification

### Exemples de préparation de polyesters thermoplastiques selon l'invention

### Exemple 1

Dans un réacteur de 7,5 L sont ajoutés 1079 g (17,40 mol) d'éthylène glycol, 281 g de solution d'isoidide (1,01 mol), 2656 g (16,00 mol) d'acide téréphtalique, 0,5 g de tetraéthylammonium hydroxyde, 1,6 g d'Irganox 1010, 0,29 g d'acétate de cobalt et 0,96 g de dioxyde de germanium.

Pour extraire l'oxygène résiduel des cristaux d'isosorbide, 4 cycles vide-azote sont effectués entre 60 et 80 °C. Le mélange réactionnel est ensuite chauffé à 260 °C (4°C/min) sous 5,7 bars de pression et sous agitation constante (150 tr/min). Le taux d'estérification est estimé à partir de la quantité de distillât collectée.

La pression est ensuite réduite à 1,2 bar en 20 minutes enfin d'évacuer l'eau résiduelle. Une fois à pression atmosphérique, 1,6 g d'Hostanox P-EPQ et 0,3 g d'acide phosphorique sont introduits dans le réacteur.

Ensuite, la pression est à nouveau réduite à 0,7 mbar en 90 minutes et la température amenée à 265°C. Ces conditions de vide et de température ont été maintenues jusqu'à obtenir une augmentation de couple de 15 Nm par rapport au couple initial.

Enfin, un jonc de polymère est coulé par la vanne de fond du réacteur, refroidi dans un bac d'eau thermo-régulé et découpé sous forme de granulés d'environ 15 mg.

La résine de poly(éthylène-co-isoidide) téréphtalate ainsi obtenue présente une viscosité réduite en solution de 66 mL/g, une température de transition vitreuse de 84°C, et un point de fusion à 241°C.

Les granulés de polyester obtenus présentent les caractéristiques de coloration suivantes : L*=51.5, a*=0,1 et b*=-1,1. Le taux d'isoidide incorporé dans les chaines est de 5,2 moles% par rapport aux diols, soit taux d'incorporation de 94 % par rapport à la quantité introduite dans le réacteur.

### Exemple 1A

Le polyester de l'exemple 1, est utilisé dans une étape de post condensation à l'état solide. Tout d'abord, le polymère est cristallisé pendant 2h30 sous flux d'azote à 120°C dans un rotavapor à bain d'huile équipé d'un ballon cannelé.

Le polyester cristallisé est ensuite soumis à une température de 230°C (température du bain d'huile) et un flux d'azote de 3,7 L/min.

Après 21,5h de post condensation, le polyester présente une viscosité en solution de 98,3 mL/g. Le taux d'isoidide incorporé dans les chaines est maintenu à 5,2 moles% par rapport aux diols. Les granulés de polyester obtenus présentent les caractéristiques de coloration suivantes : L*=79,9, a*=-0,9 et b*=-1,5

Le polyester a ensuite été injecté et des essais de traction ont été réalisés. Le polymère présente un module de traction de 1090 MPa et un allongement à la rupture de 560% ± 30%. La dureté crayon du polymère est B.

### Exemple 2

Dans un réacteur de 7,5L sont ajoutés 1004,4 g (16,2 mol) d'éthylène glycol, 614,2 g de solution d'isoidide (correspondant à 2,2 moles% d'isoidide), 2656,1 g (16,0 mol) d'acide téréphtalique, 0,5 g de tetraéthylammonium hydroxyde, 1,6 g d'Irganox 1010, 0,34g d'acétate de cobalt et 1,07 g de dioxyde de germanium.

Pour extraire l'oxygène résiduel des cristaux d'isosorbide, 4 cycles vide-azote sont effectués entre 60 et 80 °C. Le mélange réactionnel est ensuite chauffé à 250 °C (4°C/min) sous 3 bars de pression et sous agitation constante (150 tr/min). Le taux d'estérification est estimé à partir de la quantité de distillât collectée.

La pression est ensuite réduite à 1,2 bar en 20 minutes enfin d'évacuer l'eau résiduelle. Une fois à pression atmosphérique, 1,6 g d'Hostanox P-EPQ et 0,3 g d'acide phosphorique sont introduits dans le réacteur.

Ensuite, la pression est à nouveau réduite à 0,7 mbar en 90 minutes et la température amenée à 265°C. Ces conditions de vide et de température ont été maintenues jusqu'à obtenir une augmentation de couple de 15 Nm par rapport au couple initial.

Enfin, un jonc de polymère est coulé par la vanne de fond du réacteur, refroidi dans un bac d'eau thermo-régulé et découpé sous forme de granulés d'environ 15 mg.

La résine de poly(éthylène-co-isoidide) téréphtalate ainsi obtenue présente une viscosité réduite en solution de 66 mL/g et une transition vitreuse de 93°C.

Les granulés de polyester obtenus présentent les caractéristiques de coloration suivantes : L*=51.4, a*=-0.0 et b*=1,0. Le taux d'isoidide incorporé dans les chaines est de 11,0 moles% par rapport aux diols soit taux d'incorporation de 91,7 % par rapport à la quantité introduite dans le réacteur.

### Exemple 2A

Le polyester de l'exemple 2, est utilisé dans une étape de post condensation à l'état solide. Tout d'abord, le polymère est cristallisé dans un rotavapor à bain d'huile équipé d'un ballon cannelé pendant 7 h sous flux d'azote et à une température progressivement augmentée de 130 à 170°C. Le polymère cristallisé est ensuite soumis à une température de 210°C et un flux d'azote de 2 L/min.

Après 24h de post condensation, le polyester présente une viscosité en solution de 100,5 mL/g. Le taux d'isoidide incorporé dans les chaines est maintenu à 11,0 moles% par rapport aux diols. Les granulés de polymère obtenus présentent les caractéristiques de coloration suivantes : L*=79,2, a*=-0,2 et b*=1,8.

### Exemple 3

Dans un réacteur de 7,5 L sont ajoutés 855,9 g (13,80 mol) d'éthylène glycol, 1279,5 g de solution d'isoidide (4,6 mol), 2656,1 g (16,0 mol) d'acide téréphtalique, 0,5 g de tetraéthylammonium hydroxyde, 1,6 g d'Irganox 1010, 0,49 g d'acétate de cobalt et 1,32 g de dioxyde de germanium.

Pour extraire l'oxygène résiduel des cristaux d'isosorbide, 4 cycles vide-azote sont effectués entre 60 et 80 °C. Le mélange réactionnel est ensuite chauffé à 250 °C (4°C/min) sous 5,0 bars de pression et sous agitation constante (150 tr/min). Le taux d'estérification est estimé à partir de la quantité de distillât collectée.

La pression est ensuite réduite à 1,2 bar en 20 minutes enfin d'évacuer l'eau résiduelle. Une fois à pression atmosphérique, 1,6 g d'Hostanox P-EPQ et 0,32 g d'acide phosphorique sont introduits dans le réacteur.

Ensuite, la pression est à nouveau réduite à 0,7 mbar en 90 minutes et la température amenée à 265°C. Ces conditions de vide et de température ont été maintenues pendant 145 minutes jusqu'à obtenir une augmentation de couple de 0,6 Nm par rapport au couple initial.

Enfin, un jonc de polyester est coulé par la vanne de fond du réacteur, refroidi dans un bac d'eau thermo-régulé et découpé sous forme de granulés d'environ 15 mg.

La résine de poly(éthylène-co-isoidide) téréphtalate ainsi obtenue présente une viscosité réduite en solution de 29 mL/g et une température de transition vitreuse de 105°C. Les granulés de polyester. Le taux d'isoidide incorporé dans les chaines est de 24,4 moles% par rapport aux diols soit un taux d'incorporation de 98 % par rapport au ratio introduit dans le réacteur.

### Exemples comparatifs : préparation de poly(éthylène-co-isosorbide téréphtalate)

### Contre exemple 1

Dans un réacteur de 7,5L sont ajoutés 1069,7 g (17.25 mol) d'éthylène glycol, 169,7 g (1,16 mol) d'isosorbide, 2656,1 g (16,00 mol) d'acide téréphtalique, 0,5 g de tetraéthylammonium hydroxyde, 1,6 g d'Irganox 1010, 0,29g d'acétate de cobalt et 0,96 g de dioxyde de germanium.

Pour extraire l'oxygène résiduel des cristaux d'isosorbide, 4 cycles vide-azote sont effectués entre 60 et 80 °C. Le mélange réactionnel est ensuite chauffé à 260 °C (4°C/min) sous 5,7 bars de pression et sous agitation constante (150 tr/min). Le taux d'estérification est estimé à partir de la quantité de distillât collectée.

La pression est ensuite réduite à 1,2 bar en 20 minutes enfin d'évacuer l'eau résiduelle. Une fois à pression atmosphérique, 1,6 g d'Hostanox P-EPQ et 0,3 g d'acide phosphorique sont introduits dans le réacteur.

Ensuite, la pression est à nouveau réduite à 0,7 mbar en 90 minutes et la température amenée à 265°C. Ces conditions de vide et de température ont été maintenues jusqu'à obtenir une augmentation de couple de 15 Nm par rapport au couple initial.

Enfin, un jonc de polymère est coulé par la vanne de fond du réacteur, refroidi dans un bac d'eau thermo-régulé et découpé sous forme de granulés d'environ 15 mg.

La résine de poly(éthylène-co-isosorbide) téréphtalate ainsi obtenue a une viscosité réduite en solution de 68 mL/g, une température de transition vitreuse de 82°C et un point de fusion de 243°C.

Les granulés de polymère obtenus présentent les caractéristiques de coloration suivantes : L*=51,8, a*=0,2 et b*=-1,9. Le taux d'isosorbide incorporé dans les chaines est de 5,0 moles% par rapport aux diols soit un taux d'incorporation de 79 % par rapport au ratio introduit dans le réacteur.

### Contre Exemple 1A

Le polyester du contre-exemple 1 est utilisé dans une étape de post condensation à l'état solide. Tout d'abord, le polymère est cristallisé pendant 2h30 sous flux d'azote à 120°C dans un rotavapor à bain d'huile équipé d'un ballon cannelé. Le polymère cristallisé est ensuite soumis à une température de 230°C (température du bain d'huile) et un flux d'azote de 3,7 L/min.

Après 24h de post condensation, le polymère présentera une viscosité en solution de 101 mL/g. Les granulés de polymère obtenus présentent les caractéristiques de coloration suivantes : L*=80.6, a*=-1.1 et b*=-2.8. Le taux d'isosorbide incorporé dans les chaines est à 4.9 moles% par rapport aux diols.

Le polymère a ensuite été injecté et des essais de traction ont été réalisés. Le polymère a un module de traction de 1090 MPa et un allongement à la rupture de 480%±30%. La dureté crayon du polymère est 2B.

### Contre Exemple 2

Dans un réacteur de 7,5 L sont ajoutés 1004,4 g (16,2 mol) d'éthylène glycol, 322,4 g (2,2 mol) d'isosorbide, 2656,1 g (16,0 mol) d'acide téréphtalique, 0,5 g de tetraéthylammonium hydroxyde, 1,6 g d'Irganox 1010, 0,34 g d'acétate de cobalt et 1,07 g de dioxyde de germanium.

Pour extraire l'oxygène résiduel des cristaux d'isosorbide, 4 cycles vide-azote sont effectués entre 60 et 80 °C. Le mélange réactionnel est ensuite chauffé à 250 °C (4°C/min) sous 3 bars de pression et sous agitation constante (150 tr/min). Le taux d'estérification est estimé à partir de la quantité de distillât collectée. La pression est ensuite réduite à 1,2 bar en 20 minutes enfin d'évacuer l'eau résiduelle. Une fois à pression atmosphérique, 1,6 g d'Hostanox P-EPQ et 0,3 g d'acide phosphorique sont introduits dans le réacteur. Ensuite, la pression est à nouveau réduite à 0,7 mbar en 90 minutes et la température amenée à 265°C. Ces conditions de vide et de température ont été maintenues jusqu'à obtenir une augmentation de couple de 15Nm par rapport au couple initial. Enfin, un jonc de polymère est coulé par la vanne de fond du réacteur, refroidi dans un bac d'eau thermo-régulé et découpé sous forme de granulés d'environ 15 mg.

La résine de poly(éthylène-co-isosorbide) téréphtalate ainsi obtenue a une viscosité réduite en solution de 66 mL/g et une température de transition vitreuse de 89°C. Les granulés de polymère obtenus présentent les caractéristiques de coloration suivantes : L*=52.1, a*=-0.1 et b*=1,4. Le taux d'isosorbide incorporé dans les chaines est de 9,4 moles% par rapport aux diols soit un taux d'incorporation de 78,3 % par rapport au ratio introduit dans le réacteur.

### Contre Exemple 2A

Le polyester du contre-exemple 2, est utilisé dans une étape de post condensation à l'état solide. Tout d'abord, le polymère est cristallisé dans un rotavapor à bain d'huile équipé d'un ballon cannelé pendant 3h15 sous flux d'azote et à une température de 130. Le polymère cristallisé est ensuite soumis à une température de 210°C et un flux d'azote de 2L/min.

Après 27 h de post condensation, le polymère présentera une viscosité en solution de 99,5 mL/g. Le taux d'isosorbide incorporé dans les chaines est maintenu à 9,4 moles% par rapport aux diols. Les granulés de polymère obtenus présentent les caractéristiques de coloration suivantes : L*=78.8, a*=-0.4 et b*=1.7.

### Contre exemple 3

Dans un réacteur de 7,5 L sont ajoutés 856,1 g (13,8 mol) d'éthylène glycol, 672,0 g (4,6 mol) d'isosorbide, 2656,1 g (16,0 mol) d'acide téréphtalique, 0,5 g de tetraéthylammonium hydroxyde, 1,6 g d'Irganox 1010, 0,49 g d'acétate de cobalt et 1,32 g de dioxyde de germanium.

Pour extraire l'oxygène résiduel des cristaux d'isosorbide, 4 cycles vide-azote sont effectués entre 60 et 80 °C. Le mélange réactionnel est ensuite chauffé à 250 °C (4°C/min) sous 5,0 bars de pression et sous agitation constante (150 tr/min). Le taux d'estérification est estimé à partir de la quantité de distillât collectée.

La pression est ensuite réduite à 1,2 bar en 20 minutes enfin d'évacuer l'eau résiduelle. Une fois à pression atmosphérique, 1,6 g d'Hostanox P-EPQ et 0,3 g d'acide phosphorique sont introduits dans le réacteur.

Ensuite, la pression est à nouveau réduite à 0,7 mbar en 90 minutes et la température amenée à 265°C. Ces conditions de vide et de température ont été maintenues jusqu'à obtenir une augmentation de couple de 15Nm par rapport au couple initial.

Enfin, un jonc de polymère est coulé par la vanne de fond du réacteur, refroidi dans un bac d'eau thermo-régulé et découpé sous forme de granulés d'environ 15 mg.

La résine de poly(éthylène-co-isosorbide) téréphtalate ainsi obtenue a une viscosité réduite en solution de 56 mL/g et une température de transition vitreuse de 96°C.

Les granulés de polymère obtenus présentent les caractéristiques de coloration suivantes : L*=50,0, a*=-0,6 et b*=1,4. Le taux d'isosorbide incorporé dans les chaines est de 20,8 moles% par rapport aux diols soit un taux d'incorporation de 83 % par rapport au ratio introduit dans le réacteur.

### Conclusion des essais

A condition de préparations équivalentes, les polyesters thermoplastiques selon l'invention présentent amélioration de la dureté et de l'allongement à la rupture, mais également des taux d'incorporation bien plus importants que les polyesters à base d'isosorbide.

## Revendications

1. Polyester thermoplastique comprenant :
- au moins un motif 1,4 : 3,6-dianhydro-L-iditol (A),
- au moins un motif diol aliphatique linéaire (B),
- au moins un motif acide dicarboxylique aromatique (C),
ledit polyester thermoplastique ayant une viscosité réduite en solution (25°C ; phénol (50%m) : ortho-dichlorobenzène (50%m) ; 5 g de polyester /L) supérieure à 25 mL/g étant exempt de tout motif 1,4 : 3,6-dianhydroxyhexitol autre que le motif 1,4 : 3,6-dianhydro-L-iditol (A),
la quantité molaire de motif (A) étant de 4 moles% à 90 moles% par rapport à la totalité des motifs diols présents dans le polyester et
la quantité molaire de motif (B) étant de 10 moles% à 96 moles% par rapport à la totalité des motifs diols présents dans le polyester.

2. Polyester thermoplastique selon la revendication 1, **caractérisé en ce que** le motif diol aliphatique linéaire (B) est un diol aliphatique non cyclique linéaire saturé choisi parmi l'éthylène glycol, le 1,3-propanediol, le 1,4-butanediol, le 1,5-pentanediol, le 1,6-hexanediol, le 1,8-octanediol et le 1,10-decanediol.

3. Polyester thermoplastique selon la revendication 2, **caractérisé en ce que** le diol aliphatique non cyclique linéaire saturé est l'éthylène glycol.

4. Polyester thermoplastique selon l'une des revendications 1 à 3, **caractérisé en ce que** le motif acide dicarboxylique aromatique (C) est l'acide téréphtalate.

5. Polyester thermoplastique selon l'une des revendications 1 à 4, **caractérisé en ce que**
la température de transition vitreuse est de 75°C à 115 °C, où la température de transition vitreuse est mesurée en utilisant la méthode DSC (calorimétrie différentielle à balayage) décrite dans la présente demande.

6. Polyester thermoplastique selon l'une des revendications 1 à 5, **caractérisé en ce qu'**il comprend :
- une quantité molaire de motifs 1,4 : 3,6-dianhydro-L-iditol (A) allant de 4 à 90 moles%, la quantité étant exprimée par rapport à la quantité totale des diols,
- une quantité molaire de motifs diol aliphatique linéaire (B) allant de 10 à 96 moles%, la quantité étant exprimée par rapport à la quantité totale des diols,
- une quantité molaire de motifs acide dicarboxylique aromatique (C) allant de 80 à 100 moles%, la quantité étant exprimée par rapport à la quantité totale des diacides.

7. Procédé de préparation d'un polyester thermoplastique selon l'une des revendications 1 à 6 comprenant :
- une étape d'introduction dans un réacteur de monomères comprenant au moins un 1,4 : 3,6-dianhydro-L-iditol (A), au moins un diol aliphatique linéaire (B) et au moins un acide dicarboxylique aromatique (C),
- une étape d'introduction dans le réacteur d'un système catalytique ;
- une étape de polymérisation desdits monomères pour former le polyester thermoplastique, ladite étape consistant en :
• un premier stade d'oligomérisation pendant lequel le milieu réactionnel est agité sous atmosphère inerte à une température allant de 230 à 280°C, avantageusement de 240 à 270°C, par exemple 250°C ;
• un second stade de condensation des oligomères pendant lequel les oligomères formés sont agités sous vide à une température allant de 250 à 300°C afin de former le polyester thermoplastique, avantageusement de 260 à 280°C, par exemple 265°C ;
- une étape de récupération du polyester thermoplastique.

8. Composition comprenant le polyester thermoplastique selon l'une des revendications 1 à 6.

9. Composition selon la revendication 8, **caractérisée en ce qu'**elle comprend un polymère additionnel permettant d'améliorer les propriétés au choc du polymère, ledit polymère étant choisi parmi les polyoléfines fonctionnelles telles que les polymères et copolymères d'éthylène ou de propylène fonctionnalisés, les copolymères cœur-écorce ou les copolymères à bloc.

10. Utilisation du polyester thermoplastique selon l'une des revendications 1 à 6, ou de la composition selon l'une des revendications 8 ou 9, pour la fabrication d'articles plastiques finis ou semi-finis.

## Patentansprüche

1. Thermoplastischer Polyester, umfassend:
- wenigstens eine 1,4:3,6-Dianhydro-L-iditol-Einheit (A),
- wenigstens eine lineare aliphatische Diol-Einheit (B),
- wenigstens eine aromatische Dicarbonsäure-Einheit (C),
wobei der thermoplastische Polyester eine reduzierte Viskosität in Lösung aufweist (25°C; Phenol (50 %m):ortho-Dichlorbenzol (50 %m); 5 g Polyester/l) größer als 25 ml/g, frei von jeglicher 1,4: 3,6-Dianhydroxyhexitol-Einheit außer der 1,4: 3,6-Dianhydro-L-iditol-Einheit (A),
wobei die molare Menge der Einheit (A) 4 Mol-% bis 90 Mol-%, bezogen auf die Gesamtheit der in dem Polyester vorhandenen Diol-Einheiten, beträgt und
wobei die molare Menge der Einheit (B) 10 Mol-% bis 96 Mol-%, bezogen auf die Gesamtheit der im Polyester vorhandenen Diol-Einheiten, beträgt.

2. Thermoplastischer Polyester nach Anspruch 1, **dadurch gekennzeichnet, dass** die lineare aliphatische Diol-Einheit (B) ein lineares gesättigtes, nicht-zyklisches aliphatisches Diol ist, das aus Ethylenglycol, 1,3-Propandiol, 1,4-Butandiol, 1,5-Pentandiol, 1,6-Hexandiol, 1,8-Octandiol und 1,10-Decandiol gewählt ist.

3. Thermoplastischer Polyester nach Anspruch 2, **dadurch gekennzeichnet, dass** das lineare gesättigte nicht-zyklische aliphatische Diol Ethylenglycol ist.

4. Thermoplastischer Polyester nach einem der Ansprüche 1 bis 3, **dadurch gekennzeichnet, dass** die aromatische Dicarbonsäure-Einheit (C) Terephthalatsäure ist.

5. Thermoplastischer Polyester nach einem der Ansprüche 1 bis 4, **dadurch gekennzeichnet, dass** die Glasübergangstemperatur 75 °C bis 115 °C beträgt, wobei die Glasübergangstemperatur unter Verwendung der in diesem Antrag beschriebenen DSC-Methode (Differential Scanning Calorimetry) gemessen wird.

6. Thermoplastischer Polyester nach einem der Ansprüche 1 bis 5, **dadurch gekennzeichnet, dass** er umfasst:
- eine molare Menge an 1,4:3,6-Dianhydro-L-iditol-Einheiten (A) im Bereich von 4 bis 90 Mol-%, wobei die Menge als Anteil an der Gesamtmenge der Diole angegeben ist,
- eine molare Menge an linearen aliphatischen Diol-Einheiten (B) im Bereich von 10 bis 96 Mol-%, wobei die Menge bezogen auf die Gesamtmenge der Diole angegeben ist,
- eine molare Menge an aromatischen Dicarbonsäureeinheiten (C) im Bereich von 80 bis 100 Mol-%, wobei die Menge bezogen auf die Gesamtmenge der Disäuren angegeben ist.

7. Verfahren zur Herstellung eines thermoplastischen Polyesters nach einem der Ansprüche 1 bis 6, umfassend:
- einen Schritt des Einbringens von Monomeren, die wenigstens ein 1,4:3,6-Dianhydro-L-iditol (A), wenigstens ein lineares aliphatisches Diol (B) und wenigstens eine aromatische Dicarbonsäure (C) umfassen, in einen Reaktor;
- einen Schritt der Einführung eines katalytischen Systems in den Reaktor;
- einen Schritt der Polymerisation der genannten Monomere zur Bildung des thermoplastischen Polyesters, wobei der Schritt umfasst:
• eine erste Oligomerisierungsstufe, während der das Reaktionsmedium in einer inerten Atmosphäre bei einer Temperatur von 230 bis 280 °C, vorzugsweise 240 bis 270 °C, beispielsweise 250 °C, gerührt wird;
• eine zweite Stufe der Kondensation der Oligomere, während der die gebildeten Oligomere unter Vakuum bei einer Temperatur im Bereich von 250 bis 300 °C gerührt werden, um den thermoplastischen Polyester zu bilden, vorteilhafterweise bei 260 bis 280 °C, beispielsweise 265 °C;
- einen Schritt der Rückgewinnung des thermoplastischen Polyesters.

8. Zusammensetzung, umfassend den thermoplastischen Polyester nach einem der Ansprüche 1 bis 6.

9. Zusammensetzung nach Anspruch 8, **dadurch gekennzeichnet, dass** sie ein zusätzliches Polymer zur Verbesserung der Schlageigenschaften des Polymers umfasst, wobei das Polymer aus funktionellen Polyolefinen wie z. B. funktionalisierten Ethylen- oder Propylenpolymeren und -copolymeren, Kern-Schale-Copolymeren oder Blockcopolymeren gewählt ist.

10. Verwendung des thermoplastischen Polyesters nach einem der Ansprüche 1 bis 6 oder der Zusammensetzung nach einem der Ansprüche 8 oder 9 zur Herstellung von fertigen oder halbfertigen Kunststoffartikeln.

## Claims

1. A thermoplastic polyester comprising:
- at least one 1,4:3,6-dianhydro-L-iditol unit (A),
- at least one linear aliphatic diol unit (B),
- at least one aromatic dicarboxylic acid unit (C),
said thermoplastic polyester having a reduced viscosity in solution (25°C; phenol (50wt.%):ortho-dichlorobenzene (50wt.%); 5 g of polyester/l) greater than 25 ml/g being exempt from any unit other than 1,4:3,6-dianhydro-L-iditol unit (A),
the molar amount of 1,4:3,6-dianhydro-L-iditol units (A) ranging from 4 to 90 mol%, the amount being expressed relative to the total amount of diols,
the molar amount of linear aliphatic diol units (B) ranging from 10 to 96 mol%, the amount being expressed relative to the total amount of diols.

2. The thermoplastic polyester as claimed in claim 1, **characterized in that** the linear aliphatic diol unit (B) is a saturated non-cyclic linear aliphatic diol chosen from ethylene glycol, 1,3-propanediol, 1,4-butanediol, 1,5-pentanediol, 1,6-hexanediol, 1,8-octanediol and 1,10-decanediol.

3. The thermoplastic polyester as claimed in claim 2, **characterized in that** the saturated linear non-cyclic aliphatic diol is ethylene glycol.

4. The thermoplastic polyester as claimed in one of claims 1 to 3, **characterized in that** the aromatic dicarboxylic acid unit (C) is terephthalic acid.

5. The thermoplastic polyester as claimed in one of claims 1 to 4, **characterized in that** the glass transition temperature is from 75°C to 115°C, wherein the glass transition temperature is measured using the DSC method (differential scanning calorimetry) as described in the present application.

6. The thermoplastic polyester as claimed in one of claims 1 to 5, **characterized in that** it comprises:
- a molar amount of 1,4:3,6-dianhydro-L-iditol units (A) ranging from 4 to 90 mol%, the amount being expressed relative to the total amount of diols,
- a molar amount of linear aliphatic diol units (B) ranging from 10 to 96 mol%, the amount being expressed relative to the total amount of diols,
- a molar amount of aromatic dicarboxylic acid units (C) ranging from 80 to 100 mol%, the amount being expressed relative to the total amount of diacids.

7. A process for preparing a thermoplastic polyester as claimed in one of claims 1 to 6, comprising:
- a step of introducing, into a reactor, monomers comprising at least one 1,4:3,6-dianhydro-L-iditol (A), at least one linear aliphatic diol (B) and at least one aromatic dicarboxylic acid (C);
- a step of introducing a catalytic system into the reactor;
- a step of polymerizing said monomers so as to form the thermoplastic polyester, said step consisting of:
• a first step of oligomerization, during which the reaction medium is stirred under an inert atmosphere at a temperature ranging from 230 to 280°C, advantageously from 240 to 270°C, for example 250°C;
• a second step of condensation of the oligomers, during which the oligomers formed are stirred under vacuum, at a temperature ranging from 250 to 300°C so as to form the thermoplastic polyester, advantageously from 260 to 280°C, for example 265°C;
- a step of recovering the thermoplastic polyester.

8. A composition comprising the thermoplastic polymer as claimed in one of claims 1 to 6.

9. The composition as claimed in claim 8, **characterized in that** it comprises an additional polymer making it possible to improve the impact properties of the polymer, said polymer being chosen from functional polyolefins such as functionalized ethylene or propylene polymers and copolymers, core-shell copolymers or block copolymers.

10. The use of the thermoplastic polyester as claimed in one of claims 1 to 6 or of the composition as claimed in either of claims 8 and 9, for the production of finished or semi-finished plastic articles.
